# EUROPEAN PATENT APPLICATION

(11) **EP 1 804 423 A2**
(43) Date of publication of application: **04.07.2007**
(21) Application number: 06027052.7
(22) Date of filing: 29.12.2006
(51) Int. Cl.: H04L 12/24

(54) **Method for rapidly recovering multicast service and network device**

(30) Priority: 29.12.2005 CN 200510112294
(71) Applicant: Alcatel Lucent, 75008 Paris (FR)
(72) Inventor: DaYong, Zheng, c/o Alcatel Shanghai Bell Co., Ltd., 2001206 Shanghai (CN); LinLi, Lu, c/o Alcatel Shanghai Bell Co., Ltd., 2001206 Shanghai (CN); JianHua, Zhu, c/o Alcatel Shanghai Bell Co., Ltd., 2001206 Shanghai (CN); Yue, Xu, c/o Alcatel Shanghai Bell Co., Ltd., 2001206 Shanghai (CN)
(74) Representative: Schäfer, Wolfgang

(57) **Abstract**

The present invention discloses a method for rapidly recovering multicast service, a first network device having at least one link connected to a second network device and receiving a multicast data stream, the method comprising: a) the first network device performing link fault detection and link recovery; b) the first network device actively sending a multicast request message to the second network device via a recovered link to recover the multicast data stream; c) the second network device parsing said multicast request message and providing the multicast data stream to the first network device. According to the above implementation, after the link is recovered from fault, the network device actively sends the multicast request message to rapidly recover multicast service, which enhances reliability of multicast service and has a minimum effect on existing network devices.

## Description

### Technical field

The present invention relates to IP multicast control technique, particularly to method for rapidly recovering multicast service and network device.

### Background art

In access network communications using Ethernet technique, multicast service (e.g. IPTV network television, IP conversation television service, IP online courses and etc.) becomes a more and more popular service.

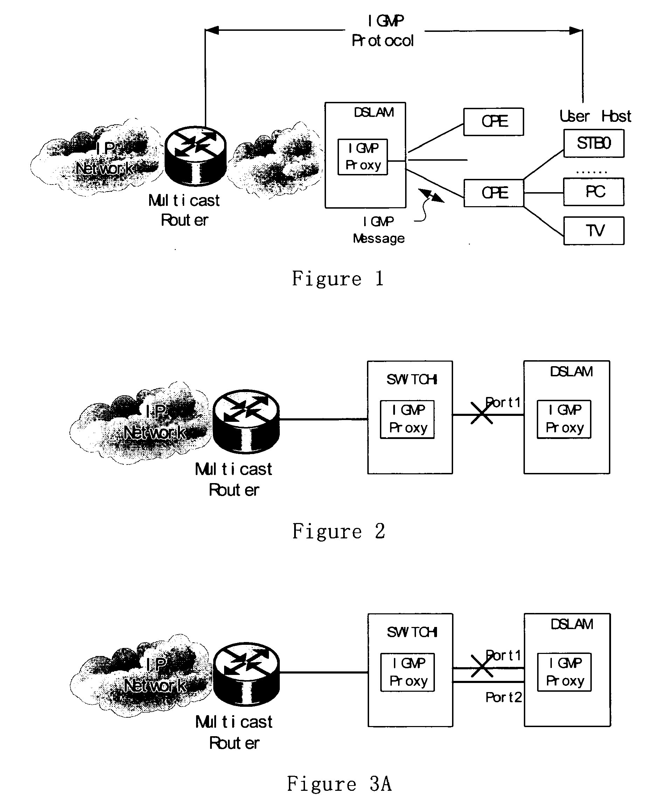

Figure 1 is a schematic diagram showing structure of a typical IP multicast system. A group membership protocol is used between a user host and a multicast router, e.g. typical Internet Group Management Protocol (IGMP). The host notifies the multicast router by this protocol of desiring to participate in a particular multicast group and receive information thereof, while the multicast router periodically queries by this protocol whether a member of a known group in a local area network is active or not to establish and maintain group membership information of a direct online segment of the router. Also, in order to efficiently suppress diffusion of multicast service streams on a link layer, a multicast protocol such as IGMP Snooping/Proxy is introduced in a network device of an access layer, which may be in a form of Digital Subscriber Line Access Multiplexer (DSLAM), SWITCH and etc. and forms a multicast forwarding table by monitoring or intercepting a multicast request message from the user host to the multicast router, and provides the user host with replication and distribution of multicast service based on the table.

As shown in Figure 2, the DSLAM is directly connected to an upper network device SWITCH1 via an uplink port Port1. When link failure occurs due to faults in Port1, physical connection of link, ports corresponding to SWITCH1 and the like (which is referred to as link fault) and it can not be recovered in a short time, SWITCH1 may delete multicast forwarding information on the port thereof so that multicast data streams could not be immediately recovered even if the link connection were recovered in a short time.

Generally, the network device of the link lay has a main link and a spare link connected to the upper network device and corresponding spare devices are provided for some key upper network devices. The main link and the spare link are respectively connected to corresponding main and spare upper network devices. When a fault occurs in the main link, the network access device may switch to the spare link and recover services carried on the main link.

As shown in Figure 3A, the DSLAM is connected to an upper network device SWITCH1 via two uplink ports Port 1 and Port 2 to form a main link configuration and a spare link configuration., they may operate as a spare device for each other by means of Spanning Tree Protocol/Rapid Spanning Tree Protocol (STP/RSTP) and the like. Normally, the main link is in operation and the spare link is used as a single backup. When the main link fails due to faults in Port1, physical connection of the main link, ports corresponding to SWITCH1 and the like (which is referred to as link fault), resulting in switching between the main and spared links, SWITCH1 will not replicate the multicast forwarding information on a corresponding port of the main link to a corresponding link of the spare link thereof so that multicast data streams carried on the main link could not be immediately provided by the recovered link even if the link connection were recovered by establishing the spare link in a short time.

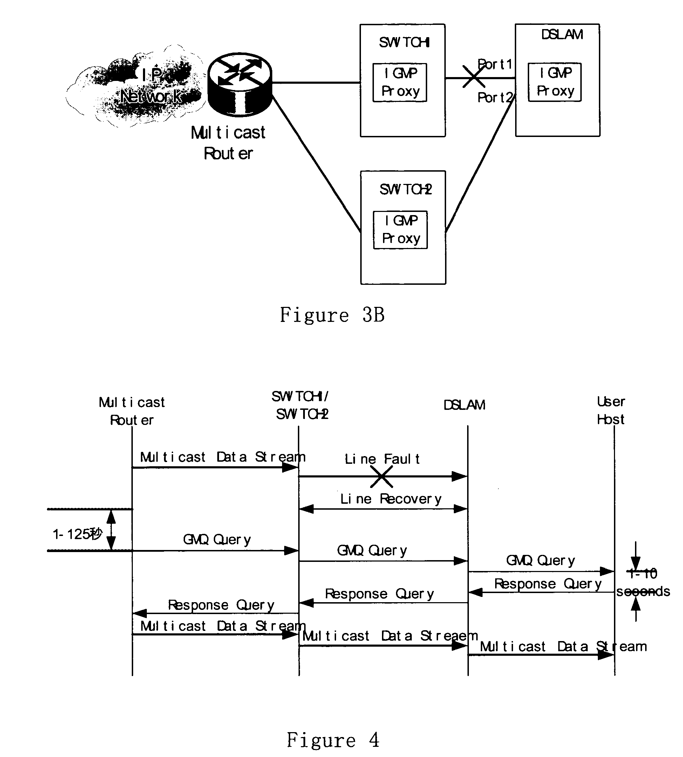

As shown in Figure 3B, the DSLAM is connected to two upper network devices SWITCH1 and SWITCH2 via two uplink ports Port 1 and Port 2, respectively. In a two-layer forwarding network, the spare link operates using STP/RSTP protocol. Normally, SWITCH1 connected to the main link corresponding to Port 1 is in operation, SWITCH2 connected to the spare link corresponding to Port 2 is in a backup state, acting as a single backup or used for load balance to provide multicast data streams. When faults occur in SWITCH1, physical connection of the main link, or Port1 (which is referred to as link fault), the DSLAM will switch to the spare link comprised of the spare device SWITCH2 and Port2 for operation, but SWITCH2 does not have the multicast forwarding information on SWITCH1, so that multicast data streams carried on the main link could not be immediately provided by the recovered link even if the link connection were recovered by establishing the spare link in a short time.

Under the above network environment, after link faults occur, even if the link were recovered in a short time, the user host accessed by the DSLAM would need to resend a request for participating in multicast or recover the multicast by a General Member Query (GMQ) message periodically sent from the multicast router and a response to the message of the user if it is required to recover the multicast service before link faults occur. The process of recovering is shown in Figure 4. However, since a period of GMQ querying is usually 125 seconds and a message for response is generated by a lower device or the user within 10 seconds, the recovering time of the multicast service is long, and generally a random time within 135 seconds after the link is recovered or the spare link is established.

Summing up the above, under the above network environment, the multicast service can be recovered by the multicast router periodically sending a GMQ message, however, the recovering time is random (a random time within 135 seconds) and long, which has an effect on provision of multicast service.

### Content of the invention

One of the objects of the present invention is to provide a method for rapidly recovering multicast service, a first network device having at least one link connected to a second network device and receiving a multicast data stream, the method comprising: a) the first network device performing link fault detection and link recovery; b) the first network device actively sending a multicast request message to the second network device via a recovered link to recover the multicast data stream; c) the second network device parsing said multicast request message and providing the multicast data stream to the first network device.

Preferably, the link between said first and second network devices operates in a mode of main-spare link comprising steps a) the first network device performing switching between the main link and the spare link when a fault occurs on the main link, and b) the first network device actively sending the multicast request message to an upper network device via the spare link to recover the multicast data stream of the main link.

In the above-mentioned method, the multicast request message is a standard Internet Group Management Protocol (IGMP) multicast request message.

In the above-mentioned method, the multicast request message is an extended Internet Group Management Protocol (IGMP) multicast request message, which includes a plurality of multicast group request messages and Identification information of Virtual Local Area Network where the multicast is (VLAN_ID).

The further object of the present invention is to provide a network device, comprising: a link interface module having at least one link interface connected to an upper network device and receiving a multicast data stream; a link detection module for performing detection of fault and recovery on said link interface and generating a corresponding control message; a multicast protocol control module for sending a multicast request message to the upper network device via a recovered link based on a link recovery control message generated by the link detection module to recover the multicast data stream.

Preferably, the link interface of the link interface module operates in a mode of main-spare link and performs switching between the main link and the spare link based on a link fault control message generated by the link detection module, the multicast protocol control module sends the multicast request message to an upper network device based on a link switching control message generated by the link detection module to recover the multicast data stream of the link in fault.

Wherein the multicast request message is a standard Internet Group Management Protocol (IGMP) multicast request message.

Wherein the multicast request message is an extended Internet Group Management Protocol (IGMP) multicast request message, which includes a plurality of multicast group request messages and Identification information of Virtual Local Area Network where the multicast is (VLAN_ID).

According to the method or the network device provided in the present invention, after the link is recovered from fault, the network device actively sends the multicast request message to rapidly recover multicast service, which enhances reliability of multicast service and has a minimum effect on existing network devices.

### Description of Figure

Figure 1 is a schematic diagram showing structure of a typical IP multicast system;
Figure 2 shows a multicast model in which DSLAM has an uplink interface;
Figure 3A shows a multicast model in which DSLAM has two uplink interfaces connected to one upper network device;
Figure 3B shows a multicast model in which DSLAM has two uplink interfaces connected to different upper network devices;
Figure 4 is a schematic diagram showing multicast service recovery by means of GMQ query;
Figure 5 is a schematic diagram showing a flow for rapidly recovering multicast service proposed in the present invention;
Figure 6A shows a multicast request message defined in the present invention;
Figure 6B shows another multicast request message defined in the present invention;
Figure 6C shows another multicast request message defined in the present invention;
Figure 7 is a schematic diagram showing structure of a network device of the present invention.

### Mode of Carrying Out the Invention

Detailed description of the preferred embodiments of the present invention is provided as follows in conjunction with accompanying figures.

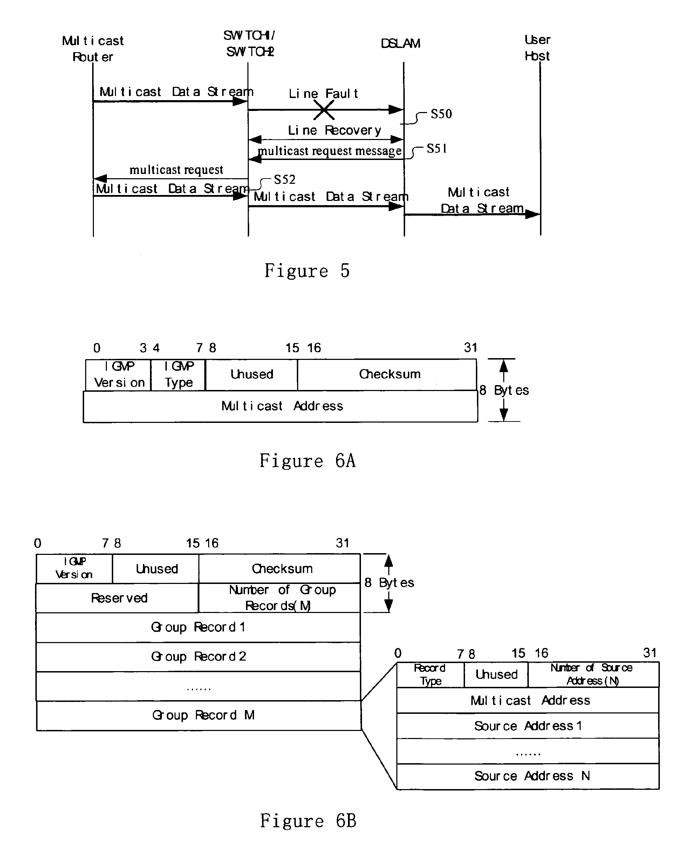

Figure 5 is a schematic diagram showing a flow for rapidly recovering multicast service proposed in the present invention.

In conjunction with Figure 2, a network device DSLAM has a link connected to an upper network device SWITCH and obtains a multicast data stream via the link. In conjunction with Figures 3A and 3B, the DSLAM has two links connected to an upper network device SWITCH1 or different upper network devices SWITCH1/SWITCH2 to form main-spare link and the spare link is used as a single backup or is used for load balance to provide the multicast data stream. In addition, it is not excluded that the DSLAM has a plurality of spare links.

Step S50: when a fault occurs in the link, for example, a fault in DSLAM link interface corresponding to the link, physical connection of the link, SWITCH port corresponding to the link, resulting in interrupt in the multicast data stream, the DSLAM is required to perform link fault detection to recover the link as soon as possible.

In the case of only one link corresponding to Figure 2, the DSLAM may perform recovery detection on the link in time.

In the case of two links (a main one and a spare one) corresponding to Figure 2, the DSLAM operates by redundant spare means of associated links, e.g. executing STP/RSTP protocol. Thus, DSLAM may switch to the spare link when a fault occurs in the main link. STP is a link layer protocol, providing path redundancy and preventing network circle, which enforces a spare data path in a block state. If a fault occurs in a path, this topology makes reconfiguration and link reconstruction by activating a spare path. RSTP, as updating of STP, will significantly reduce time of recovery from network interrupt.

Step S51: once the link is recovered, the DSLAM sends a multicast request message to an upper network device via the recovered link to recover the multicast data stream.

The multicast request message sent by the DSLAM may be the one of standard Internet Group Management Protocol Version 1 (IGMPv1) or Internet Group Management Protocol Version 2 (IGMPv2). The IGMP message is transmitted by IP data packet and indicated by the protocol field value "2" in head of the IP data packet. Figure 6A shows a format of IGMPv1 message with length of 8 bytes. The IGMP version field "1" indicates the version number of protocol, the IGMP type field "2" indicates that it is a report message sent by host, and the group address of 32 bits is the address of the multicast group in which the host participates in the report message. Here, the multicast participating request message represents that the DSLAM requests SWITCH1/SWITCH2 to forward the multicast data stream with the multicast address of the group address of 32 bits in the message to it. Reference can be made to RFC1112 and RFC2236 for the associated specification.

Preferably, when the upper network device SWITCH1/SWITCH2 supports IGMPv3 protocol, the multicast request message sent by the DSLAM may be an IGMPv3-based multicast participating request message (as shown in Figure 6B). Since an IGMPv3 message may include M group participating requests, times for sending multicast participating request messages can be reduced. Reference can be made to RFC3376 for the associated specification with IGMPv3.

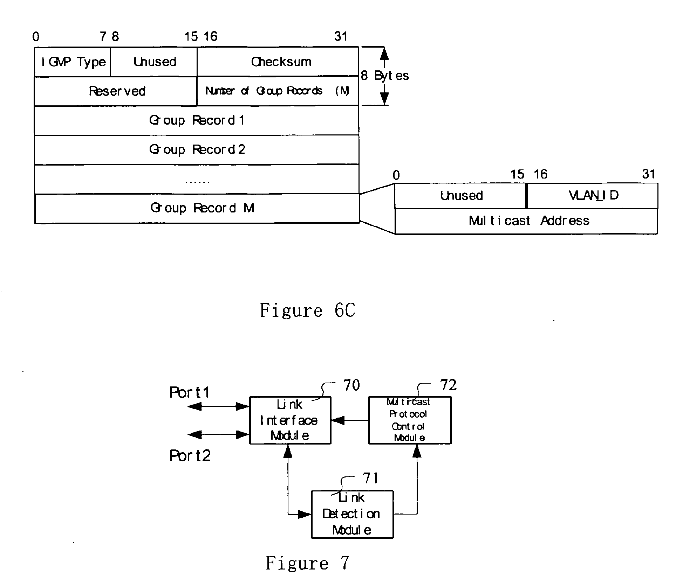

Preferably, the multicast request message sent by the DSLAM may be generated by extending the IGMPv1 or IGMPv2 protocol message. An extended IGMP message includes M multicast group request messages, which include information on identification of the virtual local area network (VLAN_ID) where respective multicasts are, and thus an extended protocol message can be used to make request for multicast request messages of different VLANs. The extended protocol message is shown in Figure 6C, in which the IP address of each multicast group is 4 bytes, VLAN_ID is 2 bytes, 2 bytes are reserved and 8 bytes are used in each group message. If each extended IGMP message may include 150 multicast group request messages, one DSLAM only requires two extended IGMP messages for including 256 multicast group request messages.

Step S52: after receiving the multicast request message sent by the DSLAM, the SWITCH1/SWITCH2 parses the message: it updates its multicast forwarding table and directly forwards the requested multicast data stream to the DSLAM via the recovered link if the multicast data stream exists on the device; otherwise, the SWITCH1/SWITCH2 makes a request for the multicast data stream from a multicast router and then forwards the multicast data stream to the DSLAM.

Preferably, the multicast request message sent by the DSLAM is based on the IGMPv1 or IGMPv2 protocol message. An extended IGMP message includes VLAN_ID information. The SWITCH1/SWITCH2 receiving the multicast request message corresponds to receiving several single multicast request messages in respective virtual local area networks. The processing on each multicast request message is as above described.

The above process is that the DSLAM actively makes a request for the multicast data stream from the upper network device just after link recovery, so the multicast data stream may be recovered just after the SWITCH1/SWITCH2 accomplishes processing on the multicast request message and the time is predictable and controllable.

Figure 7 is a schematic diagram showing structure of the network device-DSLAM of the present invention; comprising: a link interface module 70, a link detection module 71 and a multicast protocol control module 72, wherein:

The link interface module has at least one link interface connected to the upper network device and receives the multicast data stream.

In conjunction with Figure 2, the link interface module 70 has a link interface Port1 connected to the upper network device SWITCH1 and obtains the multicast data stream via the link.

In conjunction with Figures 3A, the link interface module 70 has two link interfaces Port1, Port2 connected to the same upper network device SWITCH1 to form main-spare link; in conjunction with Figures 3B, the link interface module 70 has two link interfaces Port1, Port2 connected to different upper network devices SWITCH1, SWITCH2 to form main-spare link and the Port2 is used as a single backup or is used for load balance.

Further, the link interface module 70 has a plurality of link interfaces to form a plurality of spare links if particular cases are not excluded.

The link detection module 71 performs detection of fault and recovery on the link in the link interface module 70 and generates a corresponding control message based on link status.

When the link interface module 70 only has one link interface, the link detection module 71 may perform fault detection on the link interface and generate a recovery control message to the multicast protocol control module 72 when the fault in the link is eliminated.

When the link interface module 70 has two link interfaces, the link interfaces operate in a main-spare mode and the link detection module 71 may perform fault detection on the link interfaces by redundant spare means of associated links, e.g. executing STP/RSTP protocol: 1) when the spare link is used as a single backup, the link detection module 71 may performs detection on the main link, generate a switching control message to the link interface module 70 to switch to the spare link interface when a fault occurs in the main link, and further generate a recovery control message, which includes link interface information corresponding the link in fault, to the multicast protocol control module 72 after the spare link is established; 2) when the spare link is used for load balance, the link detection module 71 may perform detection on the main and spare links, generate the switching control message to the link interface module 70 to switch to the other link interface when a fault occurs in one link and further generate the recovery control message, which includes link interface information corresponding to the link in fault, to the multicast protocol control module 72.

The multicast protocol control module 72 sends the multicast request message to the upper network device SWITCH1/SWITCH2 via the reestablished link based on the link recovery control message generated by the link detection module to recover the multicast data stream of the link in fault.

The implementation of the multicast request message can be referred to the aforementioned description.

The above embodiments of the present invention have been presented by way of example only, and not limitation. It should be noted that various changes and modifications could be made by those skilled in the art herein without departing from the sprit and scope of the invention. Therefore, all equivalent technical solutions should belong to the scope of the present invention which should be limited by the attached claims.

## Claims

1. A method for rapidly recovering multicast service, a first network device having at least one link connected to a second network device and receiving a multicast data stream, the method comprising:
a) the first network device performing link fault detection and link recovery;
b) the first network device actively sending a multicast request message to the second network device via a recovered link to recover the multicast data stream;
c) the second network device parsing said multicast request message and providing the multicast data stream to the first network device.

2. The method for rapidly recovering multicast service as claimed in claim 1, wherein the link between said first and second network devices operates in a mode of main-spare link comprising steps a) the first network device performing switching between the main link and the spare link when a fault occurs on the main link, and b) the first network device actively sending the multicast request message to an upper network device via the spare link to recover the multicast data stream of the main link.

3. The method for rapidly recovering multicast service as claimed in claim 1 or 2, wherein the multicast request message is a standard Internet Group Management Protocol (IGMP) multicast request message.

4. The method for rapidly recovering multicast service as claimed in claim 1 or 2, wherein the multicast request message is an extended Internet Group Management Protocol (IGMP) multicast request message, which includes a plurality of multicast group request messages and Identification information of Virtual Local Area Network where the multicast is (VLAN_ID).

5. A network device, comprising:
a link interface module having at least one link interface connected to an upper network device and receiving a multicast data stream;
a link detection module for performing detection of fault and recovery on said link interface and generating a corresponding control message;
a multicast protocol control module for sending a multicast request message to the upper network device via a recovered link based on a link recovery control message generated by the link detection module to recover the multicast data stream.

6. The network device as claimed in claim 5, wherein the link interface of the link interface module operates in a mode of main-spare link and performs switching between the main link and the spare link based on a link fault control message generated by the link detection module, the multicast protocol control module sends the multicast request message to an upper network device based on a link switching control message generated by the link detection module to recover the multicast data stream of the link in fault.

7. The network device as claimed in claim 5 or 6, wherein the multicast request message is a standard Internet Group Management Protocol (IGMP) multicast request message.

8. The network device as claimed in claim 5 or 6, wherein the multicast request message is an extended Internet Group Management Protocol (IGMP) multicast request message, which includes a plurality of multicast group request messages and Identification information of Virtual Local Area Network where the multicast is (VLAN_ID).
